# EUROPEAN PATENT APPLICATION

(11) **EP 1 977 873 A1**
(43) Date of publication of application: **08.10.2008**
(21) Application number: 07105685.7
(22) Date of filing: 04.04.2007
(51) Int. Cl.: B28C 5/40, B65G 53/04, C04B 16/06, C04B 28/04, C09K 8/467

(54) **Drag reducer for powdery cement compositions**

(71) Applicant: PRAD Research and Development N.V., Willemstad, Curacao (AN); Schlumberger Holdings Limited, Tortola (VG); Schlumberger Technology B.V., 2514 JG The Hague (NL); Services Pétroliers Schlumberger, 75007 Paris (FR)
(72) Inventor: Taoutaou, Salim, Aberdeen, Aberdeenshire AB32 6HZ (GB); Monaghan, Colm, Belfast, BT17 9JZ (GB)
(74) Representative: Hyden, Martin Douglas

(57) **Abstract**

A cement composition for use in preparation for a wellbore cementing slurry comprising cement dry powder and fibres for reducing drag forces.

## Description

### Technical field

This invention relates to cement compositions for use in oil well, gas wells and the like, in particular the invention relates to a dry cement powder comprising fibres for reducing drag forces and methods for handling cement during cementing operations.

### Background art

In the oil and gas industry, cement can be used to cement the casing and liner after a hole is drilled and the casing is run to the desired depth.

In an offshore environment, bulk cement is usually transported from the factory and loaded in a boat to the rig then transferred to the rig silos, whereas on land the cement is transported directly from the factory, stored in silos and then sent to the rigs in mobile silos.

During the cementing job, the dry cement is transported pneumatically (by means of air) from the silos via a hard pipeline to the surge container (temporary holding tank) which typically has 2MT capacity. Then the cement is delivered to the mixing system, where it is mixed with water and additives.

The amount of air used to transfer the cement particles is crucial for the transportation: any excess air can cause loss of dry cement and problems in getting the right amount to the surge can. Consequently, the quality of mixed slurry can be jeopardised.

The problem is that during this process the dry cement being transferred is subject to drag forces, which have an impact on the flow rate which in turn will have an impact on the mixing rates and quality of the slurry mixed.

Therefore an object of the invention is to provide techniques for replacing the drag forces for bulk cement, to speed up transfer rates, maximise mixing speed and minimize transfer losses of the cement.

It is also an object of the invention to provide techniques which allow time saving and reduce the risks associated with bulk transfer operations and reduce the emission of dust to the environment and ensure homogeneity of the cement composition.

### Disclosure of the invention

A first aspect of the invention is a cement composition for use in preparation for a wellbore cementing slurry, comprising, cement dry powder and fibres for reducing drag forces. The films comprise 1.2-1.5 denier fibres of polylactide resin with a length of 5-8mm.

Preferably, fibre concentration is in the range of 0.05-0.15% by weight of cement, and in particular no greater than 0.05% by weight of cement.

Preferably, the fibres have a specific gravity of between 1.00 to 1.50, and in particular 1.25 or 1.30. Preferably, the cement is a Class G cement.

A second aspect of the invention comprises a method for the production of a cement slurry, comprising: mixing fibres and dry the cement; air transporting the fibre and cement mixture to a storage container; and mixing the fibre and cement made in the container with water and additives causing an increase in pH such that the fibres dissolve.

This process allows existing dry storage containers such as silos to be used without the need for substantial extra equipment.

A third aspect of the invention is a process of cementing a well comprising preparing a cement slurry according to the second aspect of the method and pumping it into a well.

### Brief description of the drawings

Figure 1 shows a comparison of the speed of transfer between cementing silos for control cement versus cement comprising fibres;
Figure 2 shows a weight comparison of the powders before and after transfers;
Figure 3 shows the pressure drop over time between the two silos during a "short" transfer;
Figure 4 shows the pressure drop over time between the two silos during a "long" transfer;
Figure 5 shows particle size distribution as percentage sample retained versus sieve size for Class G cement with no fibres
Figure 6 shows particle size distribution as percentage sample retained versus sieve size for Class G cement with fibres
Figure 7 shows particle size distribution as percentage retained versus time for Class G cement with no fibres; and
Figure 8 shows particle size distribution as percentage retained versus time for Class G cement with fibres.

### Mode(s) for carrying out the invention

The cement composition or any other blend of the present invention can use any suitable fibres having a specific gravity of 1.25 to 1.30sg, which are non-toxic and non hazardous synthetic material. The fibres typically have a composition comprising 99% resin, 0.3% water and 0.3% lining (all % to weight). One particularly preferred form is a 1.30-1.45 denier fibre of a polylactide resin having a fibre length of 0.22-0.28 inches and the concentration of these fibres will depend on the cement/ blend specification and specific gravity. Preferably the fibre concentration is in the range of about 0 to 2%, preferably about 0.01-0.5%, and more preferably 0.03-0.15%, and even more preferably no greater than 0.05% by weight of cement.

The process for manufacture of the fibre containing cement will now be described.

In a first step the fibres are blended with the dry cement powder; these fibres are believed to make a net around the cement grains and allow the particles to be transported easily.

The second step involves air transporting the fibrous cement from silos in which it is stored to a surge can for mixing.

The third step involves mixing the fibrous cement in the surge can with water and additives causing an increase in pH such that the fibres dissolve to create a cement slurry. The dissolution mechanism is based on the increased pH of the solution. When the dry mixture (fibres and dry cement/blend) are mixed with the mix water (fresh water and cementing additives), the pH will increase, triggering the dissolution process. The fibres dissolve and the cement is mixed as in conventional way.

### Example 1

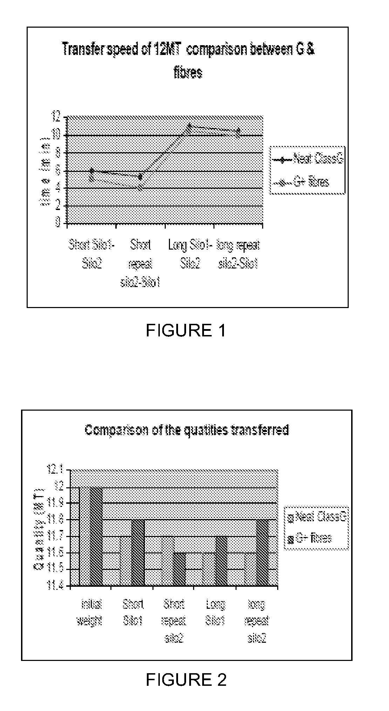

Figure 1 shows a comparison of the time consumed for transfers of a control cement without fibres ("Neat G cement") with G cement comprising 0.05% by weight of cement fibres. Two types of transfers are done, the firsts a "short" transfer and the second a "long" transfer in which the transfer distance is increased. The speed of transfer is measured, being the time taken to transfer the amount of G class cement between cementing silos and comparing the same using G class cement plus 0.05% of fibres; it is the time of transfer taken from start of transfer until the silo is empty. The results show that the transfer time was reduced and transfer speed was increased by addition of fibres for both short and long transfers.

### Example 2

Figure 2 shows a weight comparison for silos before and after the transfers were completed for a control G cement without fibres and a G cement comprising 0.05% by weight of cement fibres. A comparison is made of the weight of both powders before and residual weight left after testing, i.e. weight of both silos are monitored before and after transfer. The results show that the addition of fibres helps to extract more cement from cement storage vessels.

### Example 3

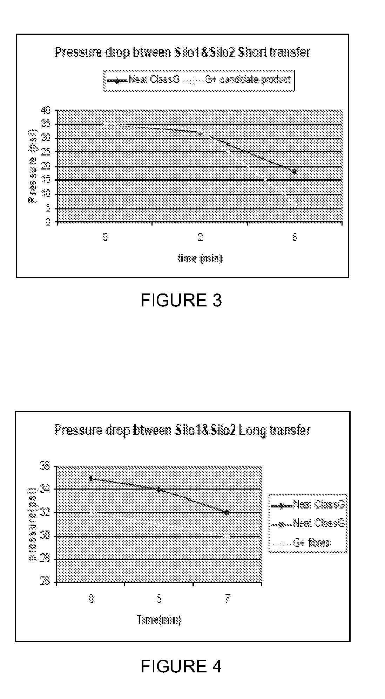

Figures 3 & 4 show the pressure drop over time between the two silos during short and long transfers respectively. The pressure drop is measured between silos while transferring by recording the discharge and inlet pressures. The results show that the distance has an effect on the pressure drop and the addition of fibres helps reduce the pressure drop.

### Example 4

Powder flowability is analysed for three cement class G powder samples as shown in Table 1. Sample 1 is the control cement class G without fibres and sample 2 is cement class G with 0.05% (by weight of cement) fibres.

**Table 1**

| Sample Type | Sample ID |
|---|---|
| Cement Class G | Sample 1 |
| Cement Class G + 0.05% BWOC Fibres | Sample 2 |

Table 2 shows a comparison of various flowability measurements for control cement versus cement containing fibres. Powder flowability is determined in three different packing states: aerated, de-aerated and consolidated, in particular by measuring aeration/de-aeration, consolidation (by tapping and direct pressure), compressibility, and permeability.

**Table 2**

| Measurements | Sample 1 | Sample 2 |
|---|---|---|
| AE₆ (mJ) Aerated Energy | 63.0 | 136 |
| AR₆ Aeration Ratio | 21.2 | 8.78 |
| CE_{10DP} (mJ) Compaction Energy | 4028 | 3395 |
| CI_{10DP} Compaction Index | 3.42 | 2.82 |
| CE₂₅₀ₜₐₚₛ (mJ) | 7794 | 7475 |
| CI₂₅₀ₜₐₚₛ | 6.63 | 6.22 |
| Tapped density (g/mL) | 1.44 | 1.46 |
| PD₁₅ (mBar) | 67.9 | 66.6 |
| CPS₁₈ (%) | 14.4 | 16.1 |

The results indicate increased flowability with the addition of fibres.

Aeration data indicates that with the presence of fibres sample 2 fluidizes less readily. De-aeration data indicates that with the presence of fibres the powders do not readily de-aerate without mechanical disturbance. The presence of fibres decreases compaction energy and compaction index which suggests more consolidation during transportation or any process involving vibration. The presence of fibres reduces permeability and low compressibility.

### Example 5

Testing was conducted to determine the effect of fibres on particle size distribution when mixed with cement. The fibres aid cement transfer by reducing static between the cement or blend particles and improve flow. Thus, the tests show that the cement particles flow more easily due to a reduction in electrostatic charge because of the fibres, and then the particles distribute themselves, by size, among the sieves more quickly.

The tests involved measuring the time taken to distribute through a sieve shaker.

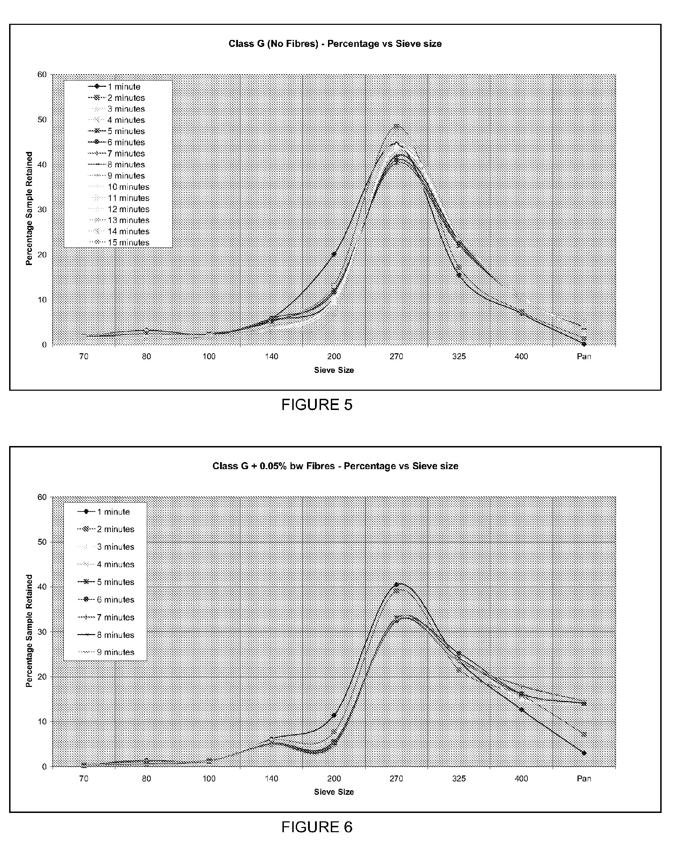

Figures 5 and 6 show the effect of the presence of fibres for percentage of sample retained versus sieve size (for each minute). Mesh sizes for the sieve set selected are: 70,80, 100, 140, 200, 270, 325 and 400 and the pan. A weight of 60 grams of dry blended cement is placed in the top of the stacked set of sieves, and the shaker is set at the highest amplitude (3) to vibrate in 1 minute intervals for a total of up to 15 minutes. After each one minute interval, the sieves are weighed and the weight of the blend on each sieve calculated.

Figure 5 shows the results for Class G Portland cement with no fibres. There is an initial particle size distribution in the first 3 minutes. However the lack of overlap on the 270 mesh data shows that the cement continues to distribute throughout the 15 minutes of testing.

Figure 6 shows the results for the blend of Class G Portland cement with 0.05% (by weight of cement) fibres. There is an initial particle size distribution in the first 3 minutes. There is very little change for the remainder of the testing, however there is a small change after around 6 minutes with the particle distribution moving from the 325 mesh to the 400 mesh sieve.

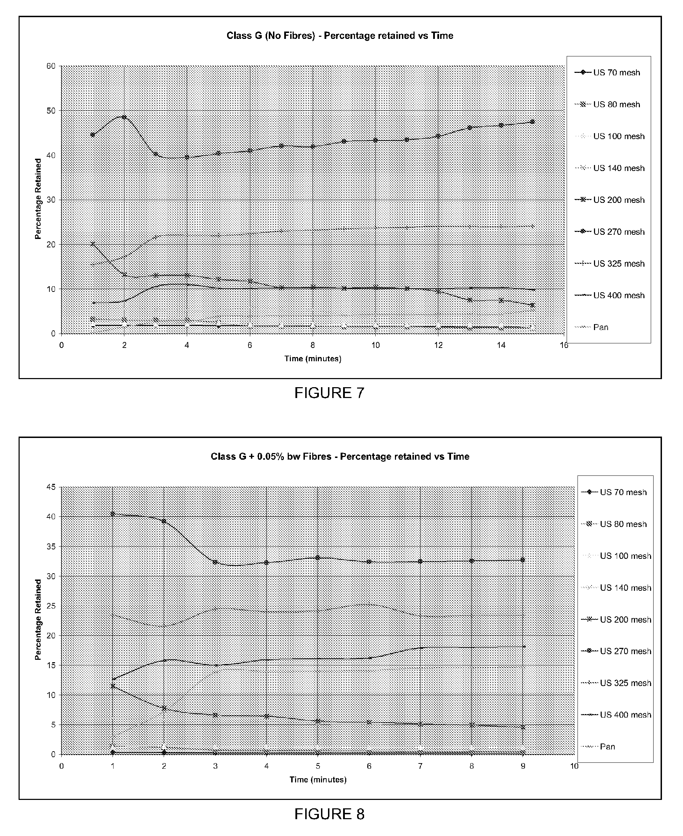

Figures 7 and 8 show the effect of the presence of fibres for percentage of sample retained on each sieve versus time (for each sieve size). If the percentage cement does not change then the lines remain flat and there is no further distribution of cement.

Figure 7 shows the results for Class G cement with no fibres. There is an initial particle size distribution in the first 3 minutes. The changing values of the weight retained on each sieve, particularly the US 270 mesh, highlights the continuing distribution of the cement.

Figure 8 shows the results for Class G cement with 0.05% fibres. There is an initial particle distribution in the first 3 minutes. There is very little change for the remainder of the testing, however a small change occurs after around 6 minutes with the particle distribution moving from the 325 mesh to the 400 mesh sieve. Thus, Class G cement with 0.05% fibres reaches a stable distribution pattern after around 6 to 7 minutes.

Changes may be made while still remaining within the scope of the invention.

## Claims

1. A cement composition for use in preparation for a wellbore cementing slurry comprising: cement dry powder and fibres for reducing drag forces.

2. The cement composition according to claim 1 wherein the fibre comprise about 1.2-1.5 denier/filament pf polylactide resins with a length of about 5-8mm.

3. The cement composition according to claims 1 or 2 wherein the fibre concentration is in the range of 0.05-0.15% by weight of cement.

4. The cement composition according to claims 1 to 3 wherein the fibre concentration no greater than 0.05% by weight of cement.

5. The cement composition according to any of claims 1 to 4 wherein the fibres have a specific gravity of between 1.00 to 1.50, preferably 1.25 or 1.30.

6. The cement composition according to any of claims 1 to 5 wherein the cement is a Class G cement.

7. A method for the production of a cement slurry comprising
- mixing fibres and dry cement;
- air transporting the fibre and cement mixture to a storage container; and
- mixing the fibre and cement mixture in the container with water and additives causing an increase in pH such that the fibres dissolve.

8. A process of cementing a well comprising preparing a cement slurry according to any of claims 1 to 6 and pumping it into the well.
